# EUROPEAN PATENT SPECIFICATION

(11) **EP 1 254 402 B1**
(45) Date of publication and mention of the grant of the patent: **08.10.2003**
(21) Application number: 00973998.8
(22) Date of filing: 27.10.2000
(51) Int. Cl.: G05B 23/02

(54) **METHOD AND SYSTEM FOR ANALYZING CONTINUOUS PARAMETER DATA FOR DIAGNOSTICS AND REPAIRS**
VERFAHREN UND SYSTEM ZUR ANALYSE VON KONTINUIRLICHEN PARAMETERDATEN FÜR DIAGNOSTIK UND REPARATUREN
PROCEDE ET SYSTEME POUR ANALYSER DES DONNEES PARAMETRIQUES CONTINUES A DES FINS DE DIAGNOSTIC ET DE REPARATION

(30) Priority: 28.10.1999 US 162045 P
(43) Date of publication of application: 06.11.2002
(73) Proprietor: General Electric Company, Erie, PA 16531 (US)
(72) Inventor: VARMA, Anil, Clifton Park, NY 12065 (US); RODDY, Nicholas, Edward, Clifton Park, NY 12065 (US); GIBSON, David, Richard, North East, PA 16428 (US)
(74) Representative: Pedder, James Cuthbert
(86) International application number: PCT/US00/29799
(87) International publication number: WO 01/031412

(56) References cited:
- US-A- 5 463 768
- TROBEC R ET AL: "OPTIMIZATION OF DIAGNOSTIC EXAMINATION" JOINT INTERNATIONAL CONFERENCE ON VECTOR AND PARALLEL PROCESSING,BERLIN,DE, 1994, pages 761-772, XP000974309

## Description

### BACKGROUND OF THE INVENTION

The present invention relates generally to machine diagnostics, and more specifically, to a system and method for processing historical repair data and continuous parameter data for predicting one or more repairs from new continuous parameter data from a malfunctioning machine.

A machine such as locomotive includes elaborate controls and sensors that generate faults when anomalous operating conditions of the locomotive are encountered. Typically, a field engineer will look at a fault log and determine whether a repair is necessary.

Approaches like neural networks, decision trees, etc., have been employed to learn over input data to provide prediction, classification, and function approximation capabilities in the context of diagnostics. Often, such approaches have required structured and relatively static and complete input data sets for learning, and have produced models that resist real-world interpretation.

Another approach, Case Based Reasoning (CBR), is based on the observation that experiential knowledge (memory of past experiences - or cases) is applicable to problem solving as learning rules or behaviors. CBR relies on relatively little pre-processing of raw knowledge, focusing instead on indexing, retrieval, reuse, and archival of cases. In the diagnostic context, a case generally refers to a problem/solution description pair that represents a diagnosis of a problem and an appropriate repair. More particularly, a case is a collection of fault log and corresponding continuous and snapshot data patterns and other parameters and indicators associated with one specific repair event in the machine under consideration.

CBR assumes cases described by a fixed, known number of descriptive attributes. Conventional CBR systems assume a corpus of fully valid or "gold standard" cases that new incoming cases can be matched against.

U.S. Patent No. 5,463,768 discloses an approach which uses error log data and assumes predefined cases with each case associating an input error log to a verified, unique diagnosis of a problem. In particular, a plurality of historical error logs are grouped into case sets of common malfunctions. From the group of case sets, common patterns, i.e., consecutive rows or strings of data, are labeled as a block. Blocks are used to characterize fault contribution for new error logs that are received in a diagnostic unit.

For a continuous fault code stream where any or all possible fault codes may occur from zero to any finite number of times and the fault codes may occur in any order, predefining the structure of a case is nearly impossible.

U.S. Patent Application Serial No. 09/285,611, (Attorney Docket No. RD-26576), assigned to the same assignee of the present invention, discloses a system and method for processing historical repair data and fault log data, which is not restricted to sequential occurrences of fault log entries and which provides weighted repair and distinct fault cluster combinations, to facilitate analysis of new fault log data from a malfunctioning machine. Further, U.S. Patent Application Serial No. 09/285,612, (Attorney Docket No. 20-LC-1927), assigned to the same assignee of the present invention, discloses a system and method for analyzing new fault log data from a malfunctioning machine in which the system and method are not restricted to sequential occurrences of fault log entries, and wherein the system and method predict one or more repair actions using predetermined weighted repair and distinct fault cluster combinations. Additionally, U.S. Patent Application Serial No. 09/438,271, (Attorney Docket No. 624226.00149), assigned to the same assignee of the present invention, discloses a system and method that uses snapshot observations of operational parameters from the machine in combination with the fault log data in order to further enhance the predictive accuracy of the diagnostic algorithms used therein.

It is believed that the inventions disclosed in the foregoing patent applications provide substantial advantages and advancements in the art of diagnostics. It would be desirable, however, to provide a system and method that uses anomaly definitions based on continuous parameters to generate diagnostics and repair data. The anomaly definitions are different from faults in the sense that the information used can be taken in a relatively wide time window, whereas faults, or even fault data combined with snapshot data, are based on discrete behavior occurring at one instance in time. The anomaly definitions, however, may be advantageously analogized to virtual faults and thus such anomaly definitions can be learned using the same diagnostics algorithms that can be used for processing fault log data.

### SUMMARY OF THE INVENTION

Generally speaking, the present invention in one exemplary embodiment fulfills the forgoing needs by providing a method for analyzing continuous parameter data from a malfunctioning locomotive or other large land-based, self-powered transport equipment. The method allows for receiving new continuous parameter data comprising a plurality of anomaly definitions from the malfunctioning equipment. The method further allows for selecting a plurality of distinct anomaly definitions from the new continuous parameter data. Respective generating steps allow for generating at least one distinct anomaly definition cluster from the plurality of distinct anomaly definitions and for generating a plurality of weighted repair and distinct anomaly definition cluster combinations. An identifying step allows for identifying at least one repair for the at least one distinct anomaly definition cluster using the plurality of weighted repair and distinct anomaly definition cluster combinations.

The present invention further fulfills the foregoing needs by providing in another aspect thereof a system for analyzing continuous parameter data from a malfunctioning locomotive or other large land-based, self-powered transport equipment. The system includes a directed weight data storage unit adapted to store a plurality of weighted repair and distinct anomaly definition cluster combinations. A processor is adapted to receive new continuous parameter data comprising a plurality of anomaly definitions from the malfunctioning equipment. Processor allows for selecting a plurality of distinct anomaly definitions from the new continuous parameter data. Processor further allows for generating at least one distinct anomaly definition cluster from the selected plurality of distinct anomaly definitions and for generating a plurality of weighted repair and distinct anomaly definition cluster combinations. Processor 12 also allows for identifying at least one repair for the at least one distinct anomaly definition cluster using the plurality of predetermined weighted repair and distinct anomaly definition cluster combinations.

### BRIEF DESCRIPTION OF THE DRAWINGS

FIG. 1 is one embodiment of a block diagram of a system of the present invention for automatically processing repair data and continuous parameter data from one or more machines and diagnosing a malfunctioning machine;
FIG. 2 is an illustration of an exemplary data structure including data fields that may be used for specifying an anomaly definition and including exemplary new continuous parameter data from a malfunctioning machine;
FIG. 3 is a flowchart describing the steps for analyzing the new continuous parameter data from a malfunctioning machine and predicting one or more possible repair actions;
FIG. 4 is an illustration of distinct anomaly definitions identified in the new continuous parameter data, such as may be represented in FIG. 2, and the number of occurrences thereof;
FIGS. 5A-5D are illustrations of distinct fault anomaly definition clusters for the distinct faults identified in FIG. 4;
FIG. 6 is a flowchart describing the steps for generating a plurality of predetermined cases, and predetermined repair and anomaly definition cluster combinations for each case;
FIG. 7 is a flowchart describing the steps for determining predetermined weighted repair and anomaly definition cluster combinations;
FIG. 8 is a printout of weighted repair and anomaly definition cluster combinations provided by the system shown in FIG. 1 for continuous parameter that may be represented in FIG. 2, and a listing of recommended repairs;
FIG. 9 is a flowchart further describing the step of predicting repairs from the weighted repair and anomaly definition cluster combinations shown in FIG. 8; and
FIG. 10 is one embodiment of a flowchart describing the steps for automatically analyzing new continuous parameter data from a malfunctioning machine and predicting one or more possible repair actions.

### DETAILED DESCRIPTION OF THE INVENTION

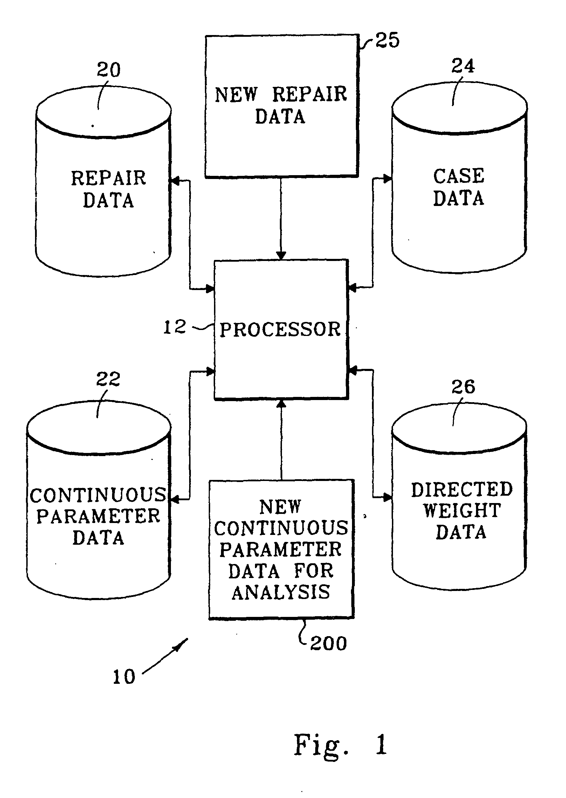

FIG. 1 diagrammatically illustrates one exemplary embodiment of a system 10 of the present invention. In one aspect, system 10 provides automated analysis of continuous parameter data, from a malfunctioning machine such as a locomotive, and prediction of one or more possible repair actions.

Although the present invention is described with reference to a locomotive, system 10 can be used in conjunction with any machine in which operation of the machine is monitored, such as a chemical, an electronic, a mechanical, a microprocessor machine and any other land-based, self-powered transport equipment.

Exemplary system 10 includes a processor 12 such as a computer (e.g., UNIX workstation) having a hard drive, input devices such as a keyboard, a mouse, magnetic storage media (e.g., tape cartridges or disks), optical storage media (e.g., CD-ROMs), and output devices such as a display and a printer. Processor 12 is operably connected to a repair data storage unit 20, a continuous parameter data storage unit 22, a case data storage unit 24, and a directed weight data storage unit 26.

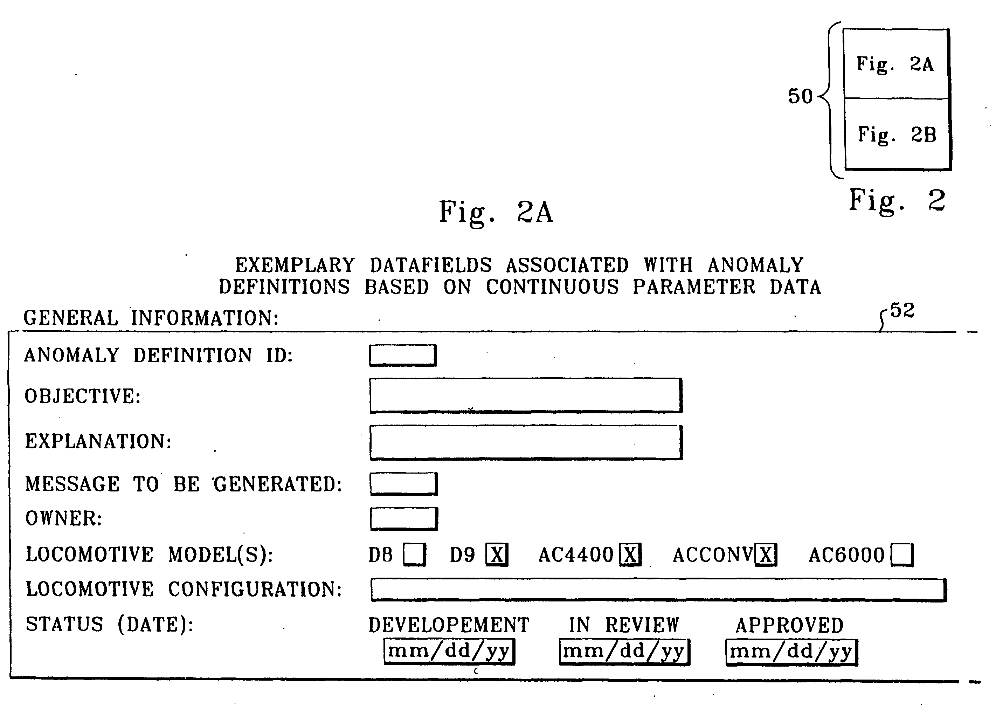

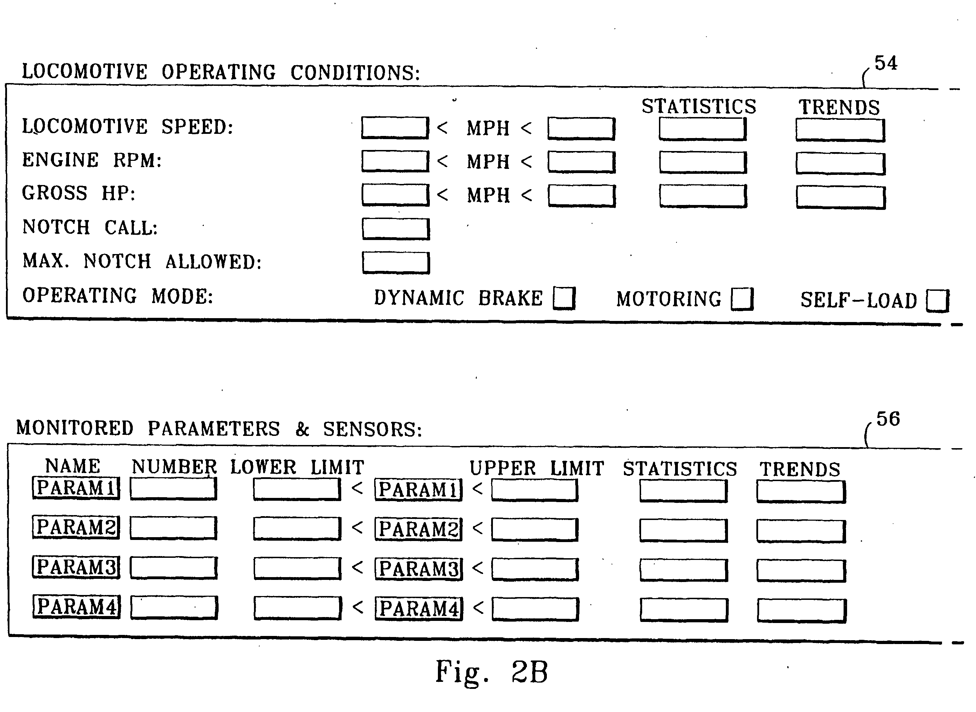

FIG. 2 shows an exemplary data structure 50 comprising a plurality of data fields, generally associated with anomaly definitions based on continuous parameter data. As shown in FIG. 2, a set of data fields 52 may include general information regarding each anomaly definition, such as anomaly definition identifier, objective, explanatory remarks, message to be automatically generated upon detection of a respective anomaly definition, personnel responsible for handling a respective anomaly definition, locomotive model and configuration, etc. As further shown in FIG. 2, a set of data fields 54 may include observations indicative of locomotive operating conditions that may be associated with an anomaly definition, including statistics data and trend data that may be extracted from such observations. FIG. 2 further shows a set of data fields 56 that may include continuous operational parameter data that may be associated with a given anomaly definition. For example, if parameter 1 is outside a predefined range, and the standard deviation of parameter 2 is beyond a predefined level, and parameter 3 exhibits a trend that exceeds a predefined rate of change, and parameter 4 is outside another predefined range under a given set of locomotive operating condition, then, assuming each of the above conditions is met, and further assuming that there is an anomaly definition specifying each of such conditions, that would constitute detection of such anomaly definition, that is, the occurrence of each of such events would trigger that anomaly definition. It will hc appreciated that the level of information that can be obtained from anomaly definitions based on continuous parameter data comprising a selectable time window is more statistically robust compared to fault log data that are based on the occurrence of single instance events. The inventors of the present invention have advantageously recognized that diagnostics algorithm techniques typically associated with the processing of fault log data may now be extended to processing anomaly definitions based on continuous parameter data, as opposed to singular time events.

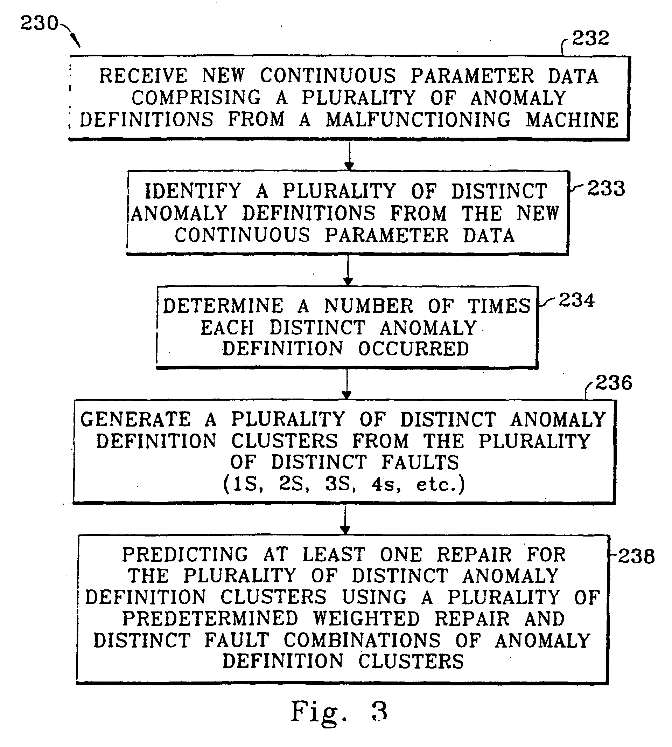

FIG. 3 is a flowchart which generally describes the steps for analyzing new continuous parameter data 200 (FIG. 1). As shown in FIG. 3 at 232, the new continuous parameter data comprising a plurality of anomaly definitions from a malfunctioning machine is received. At 233, a plurality of distinct anomaly definitions from the new continuous parameter data is identified, and at 234, the number of times each distinct anomaly definition occurred in the new continuous parameter data is determined. As used herein, the term "distinct anomaly definition" is an anomaly definition or anomaly code which differs from other anomaly definitions or anomaly codes so that, as described in greater detail below, if the continuous parameter data includes more than one occurrence of the same anomaly definition or anomaly code, then similar anomaly definitions or anomaly codes are identified only once. As will become apparent from the discussion below, in one exemplary embodiment, it is the selection or triggering of distinct anomaly definitions which is important and not the order or sequence of their arrangement.

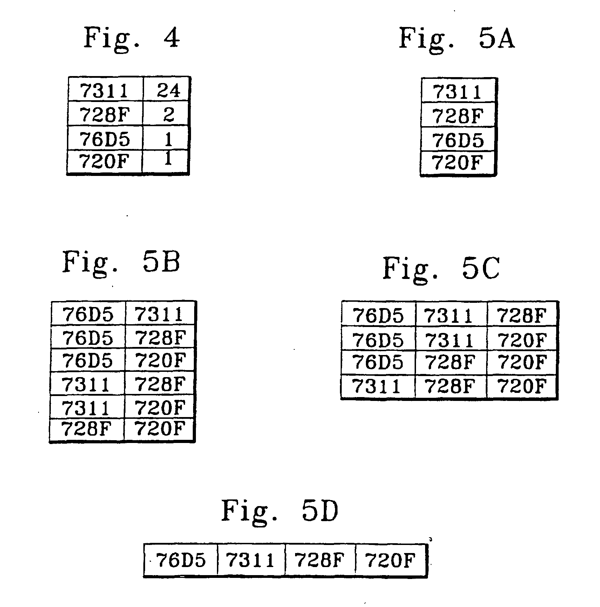

FIG. 4 shows an exemplary plurality of distinct anomaly definitions and the number of times in which each distinct anomaly definition occurred for continuous parameter 220 (FIG. 2). In this example, anomaly definition code 7311 represents a phase module malfunction which occurred 24 times, anomaly definition code 728F indicates an inverter propulsion malfunction which occurred twice, anomaly definition code 76D5 indicates an anomaly definition which occurred once, and anomaly definition code 720F indicates an inverter propulsion malfunction which occurred once.

With reference again to FIG. 3, a plurality of anomaly definition clusters is generated for the distinct anomaly definitions at 236. FIGS. 5A-5D illustrate the distinct anomaly definition clusters generated from the distinct anomaly definitions extracted from continuous parameter data 200. Four single anomaly definition clusters (e.g., anomaly definition code 7311, anomaly definition code 728F, anomaly definition code 76D5, and anomaly definition code 720F) are illustrated in FIG. 5A. Six double anomaly definition clusters (e.g., anomaly definition codes 76D5 and 7311, anomaly definition codes 76D5 and 728F, anomaly definition codes 76D5 and 720F, anomaly definition codes 7311 and 728F, anomaly definition codes 7311 and 720F, and anomaly definition codes 728F and 720F) are illustrated in FIG. 5B. Four triple anomaly definition clusters (e.g., anomaly definition codes 76D5, 7311, and 728F), anomaly definition codes 76D5, 7311, and 720F, anomaly definition codes 76D5, 728F, and 720F, and anomaly definition codes 7311, 728F, and 720F) are illustrated in FIG. 5C, and one quadruple anomaly definition cluster (e.g., 76D5, 7311, 728F, and 720F) is illustrated in FIG. 5D.

From the present description, it will be appreciated by those skilled in the art that an anomaly definition log having a greater number of distinct anomaly definitions would result in a greater number of distinct anomaly definition clusters (e.g., ones, twos, threes, fours, fives, etc.).

At 238, at least one repair is predicted for the plurality of anomaly definition clusters using a plurality of predetermined weighted repair and anomaly definition cluster combinations. The plurality of predetermined weighted repair and anomaly definition cluster combinations may be generated as follows.

With reference again to FIG. 1, processor 12 is desirably operable to process historical repair data contained in a repair data storage unit 20 and historical continuous parameter data contained in a continuous parameter data storage unit 22 regarding one or more locomotives.

For example, repair data storage unit 20 includes repair data or records regarding a plurality of related and unrelated repairs for one or more locomotives. Continuous parameter data storage unit 22 includes continuous parameter data or records regarding a plurality of anomaly definitions occurring for one or more locomotives.

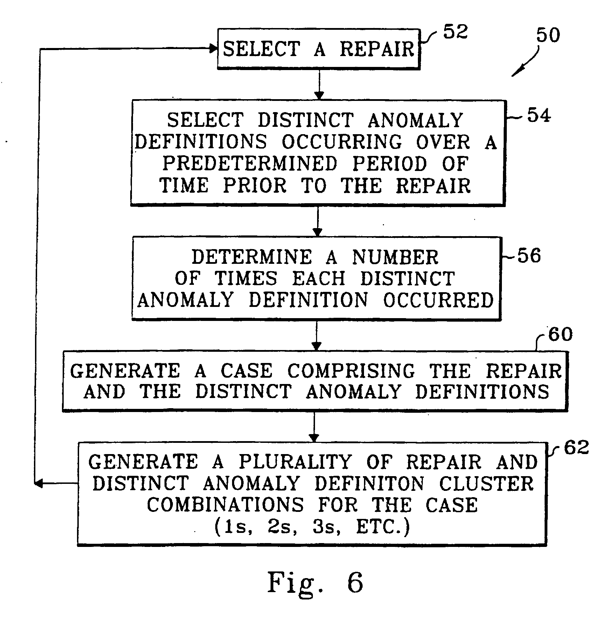

FIG. 6 is a flowchart of an exemplary process 50 of the present invention for selecting or extracting repair data from repair data storage unit 20 and continuous parameter data from the continuous parameter data storage unit 22 and generating a plurality of cases, and repair and anomaly definition cluster combinations.

Exemplary process 50 comprises, at 52, selecting or extracting a repair from repair data storage unit 20 (FIG. 1). Given the identification of a repair, the present invention searches continuous parameter data storage unit 22 (FIG. 1) to select or extract anomaly definitions occurring over a predetermined period of time prior to the repair, at 54. At 56, the number of times each distinct anomaly definition occurred during the period of time is determined.

A repair and corresponding distinct anomaly definitions are summarized and stored as a case, at 60. For each case, a plurality of repair and anomaly definition cluster combinations are generated at 62 (in a similar manner as described for the new continuous parameter data).

Process 50 is repeated by selecting another repair entry from repair data to generate another case, and to generate a plurality of repair and anomaly definition cluster combinations. Case data storage unit 24 desirably comprises a plurality of cases comprising related and unrelated repairs.

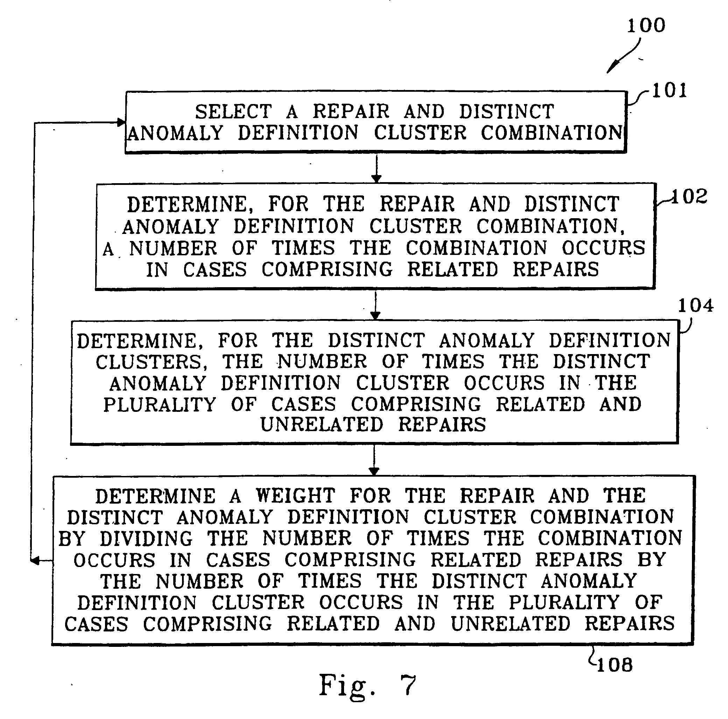

FIG. 7 is a flowchart of an exemplary process 100 of the present invention for generating weighted repair and anomaly definition cluster combinations based on the plurality of cases generated in process 50. Process 100 comprises, at 101, selecting a repair and anomaly definition cluster combination, and determining, at 102, the number of times the combination occurs for related repairs. The number of times the combination occurs in the plurality of cases of related and unrelated repairs, e.g., all repairs for similar locomotives, is determined at 104. A weight is determined at 108 for the repair and distinct anomaly definition cluster combination by dividing the number of times the distinct anomaly definition cluster occurs in related cases by the number of times the distinct anomaly definition cluster occurs in all, e.g., related and unrelated cases, and the weighted repair and distinct anomaly definition cluster combination is desirably stored in a directed weight data storage unit 26.

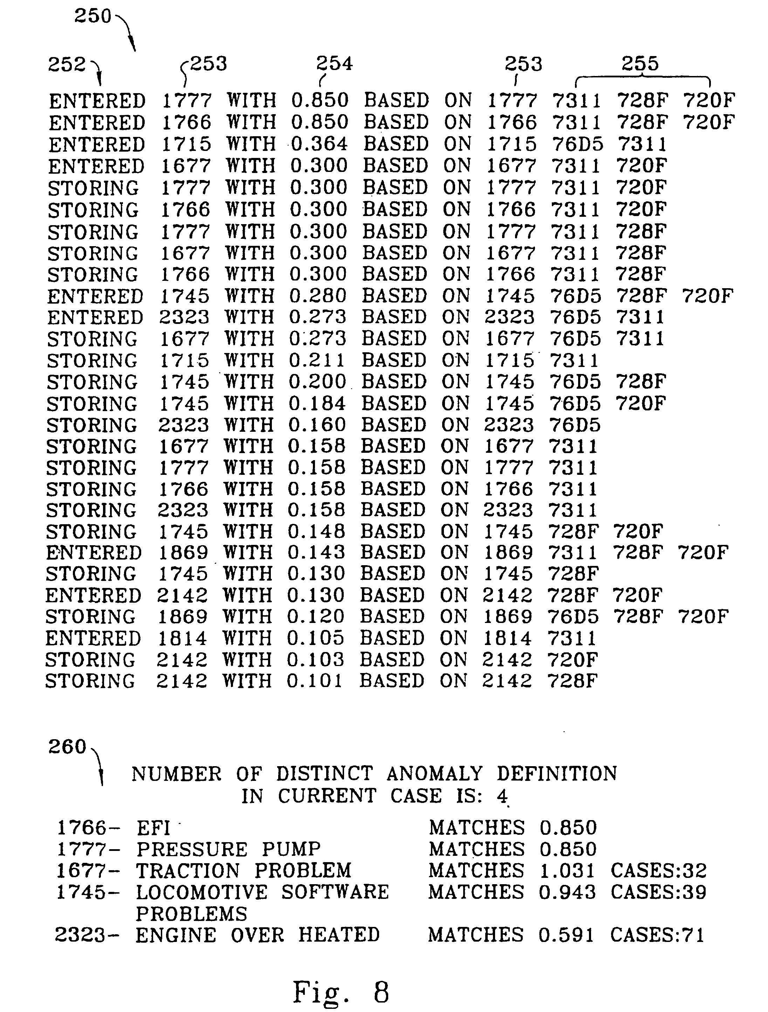

FIG. 8 illustrates an exemplary printout 250 of the results generated by system 10 (FIG. 1) based on continuous parameter data 200 (FIG. 1), in which in a first portion 252, a plurality of corresponding repairs 253, assigned weights 254, and anomaly definition clusters 255 are presented. As shown in a second portion 260 of printout 250, five recommendations for likely repairs actions are presented for review by a field engineer.

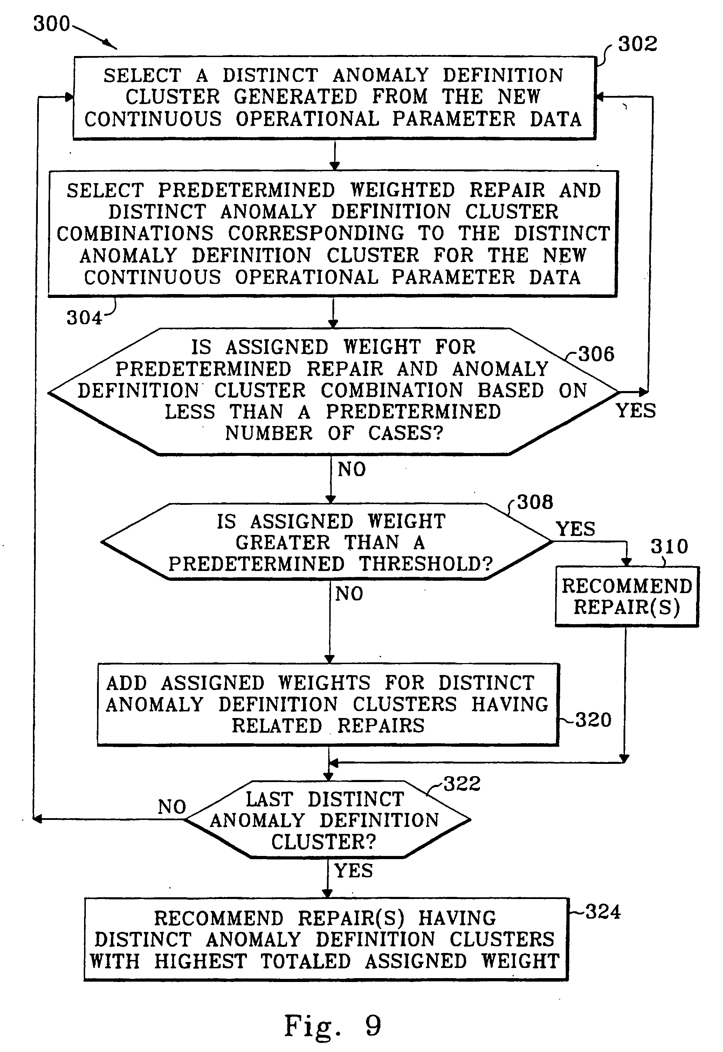

FIG. 9 is a flowchart of an exemplary process 300 for determining and presenting the top most likely repair candidates which may include repairs derived from predetermined weighted repair and distinct anomaly definition cluster combinations having the greatest assigned weighted values or repairs which are determined by adding together the assigned weighted values for anomaly definition clusters for related repairs.

As shown in FIG. 9, initially, a distinct anomaly definition cluster generated from the new continuous parameter data is selected at 302. At 304, predetermined repair(s) and assigned weight(s) corresponding to the distinct anomaly definition cluster are selected from directed weight storage unit 26 (FIG. 1).

At 306, if the assigned weight for the predetermined weighted repair and anomaly definition cluster combination is determined by a plurality of cases for related and unrelated repairs which number is less than a predetermined number, e.g., 5, the cluster is excluded and the next distinct anomaly definition cluster is selected at 302. This prevents weighted repair and anomaly definition cluster combinations which are determined from only a few cases from having the same effect in the prediction of repairs as weighted repair and anomaly definition cluster combinations determined from many cases.

If the number of cases is greater than the predetermined minimum number of cases, at 308, a determination is made as to whether the assigned value is greater than a threshold value, e.g., 0.70 or 70%. If so, the repair is displayed at 310. If the anomaly definition cluster is not the last anomaly definition cluster to be analyzed at 322, the next distinct anomaly definition cluster is selected at 302 and the process is repeated.

If the assigned weight for the predetermined weighted repair and anomaly definition cluster combination is less than the predetermined threshold value, the assigned weights for related repairs are added together at 320. Desirably, up to a maximum number of assigned weights, e.g., 5, are used and added together. After selecting and analyzing the distinct anomaly definition clusters generated from the new continuous parameter data, the repairs having the highest added assigned weights for anomaly definition clusters for related repairs are displayed at 324.

With reference again to FIG. 8, repairs corresponding to the weighted repair and anomaly definition cluster combinations in which the assigned weights are greater than the threshold value are presented first. As shown in FIG. 8, repair codes 1766 and 1777 and distinct anomaly definition cluster combinations 7311, 728F, and 720F, have an assigned weight of 85% and indicate a recommended replacement of the EFI.

As also shown in FIG. 8, repairs for various anomaly definition clusters having the highest added or total weight are presented next. For example, repair code 1677 which corresponds to a traction problem has a totaled assigned weight of 1.031, repair code 1745 which corresponds to a locomotive software problem has a totaled assigned weight of 0.943, and repair code 2323 which corresponds to an overheated engine has a totaled assigned weight of 0.591.

Advantageously, the top five most likely repair actions are determined and presented for review by a field engineer. For example, up to five repairs having the greatest assigned weights over the threshold value are presented. When there is less than five repairs which satisfy the threshold, the remainder of recommended repairs are presented based on a total assigned weight.

Desirably the new continuous parameter data is initially compared to a prior continuous parameter data from the malfunctioning locomotive. This allows determination whether there is a change in the continuous parameter data over time. For example, if there is no change, e.g., no new anomaly definitions, then it may not be necessary to process the new continuous parameter data further.

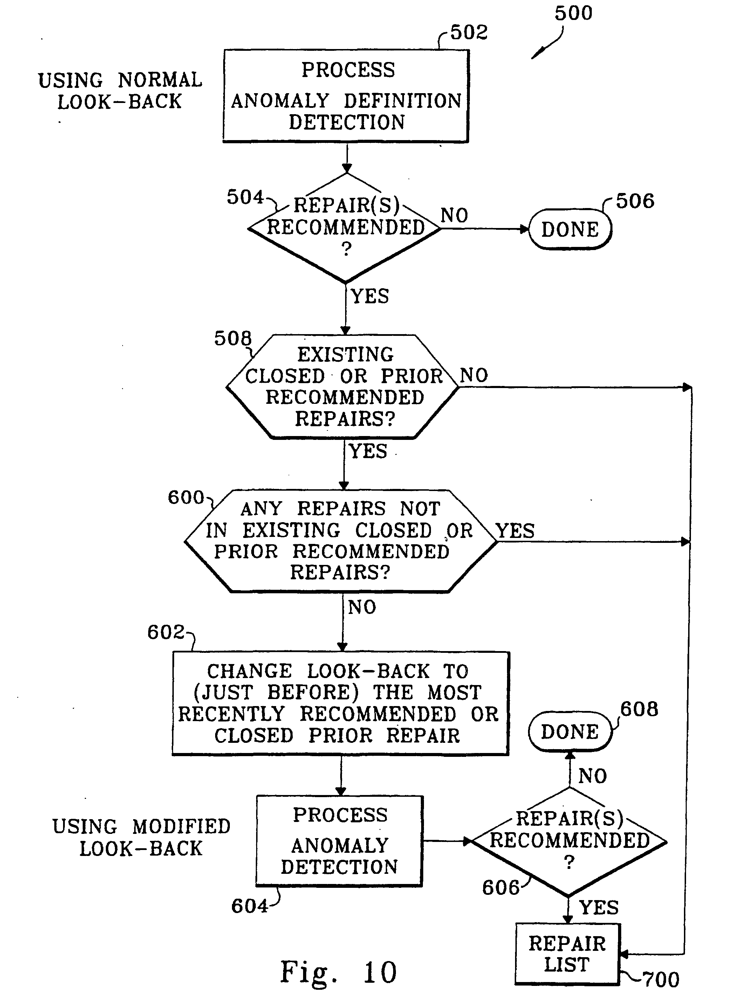

FIG. 10 illustrates a flowchart of an exemplary automated process 500 for analyzing continuous parameter data from a locomotive, e.g., new continuous parameter data which is generated every day, using system 10. In particular, process 500 accommodates the situation where a prior repair is undertaken or a prior repair is recommended within the predetermined period of time over which the continuous parameter data is analyzed. This avoids recommending the same repair which has been previously recommended and/or repaired.

At 502, new continuous parameter data is received which includes anomaly definitions occurring over a predetermined period of time, e.g., 14 days. The continuous parameter data is analyzed, for example as described above, generating distinct anomaly definition clusters and comparing the generated anomaly definition clusters to predetermined weighted repair and anomaly definition cluster combinations.

At 504, the analysis process may use a thresholding process described above to determine whether any repairs are recommended (e.g., having a weighted value over 70%). If no repairs are recommended, the process is ended at 506. The process is desirably repeated again with a download of new continuous parameter data the next day.

If a repair recommendation is made, existing closed (e.g., performed or completed repairs) or prior recommended repairs which have occurred within the predetermined period of time are determined at 508. For example, existing closed or prior recommended repairs may be stored and retrieved from repair data storage unit 20. If there are no existing or recommended repairs than all the recommended repairs at 504 are listed in a repair list at 700.

If there are existing closed or prior recommended repairs, then at 600, any repairs not in the existing closed or prior recommended repairs are listed in the repair list at 700.

For repairs which are in the existing closed or prior recommended repairs, at 602, the look-back period (e.g., the number of days over which the anomaly definitions are chosen) is revised. Using the modified look-back or shortened period of time, the modified continuous parameter data is analyzed at 604, as described above, using distinct anomaly definition clusters, and comparing the generated anomaly definition clusters to predetermined weighted repair and anomaly definition cluster combinations.

At 606, the analysis process may use the thresholding process described above to determine whether any repairs are recommended (e.g., having a weighted value over 70%). If no repairs are recommended, the process is ended at 608 until the process is stated again with a new continuous parameter data from the next day, or if a repair is recommended it is added to the repair list at 700.

From the present description, it will be appreciated by those skilled in the art that other processes and methods, e.g., different thresholding values or continuous parameter data analysis which does not use distinct anomaly definition clusters, may be employed in predicting repairs from the new continuous parameter data according to process 500 which takes into account prior performed repairs or prior recommended repairs.

Thus, the present invention provides in one aspect a method and system for processing a new continuous parameter which is not restricted to sequential occurrences of anomaly definitions or error log entries. In another aspect, the calibration of the diagnostic significance of anomaly definition clusters is based upon cases of related repairs and cases for all the repairs.

While the invention has been described with reference to preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed herein, but that the invention will include all embodiments falling within the scope of the appended claims.

## Claims

1. A method for analyzing continuous parameter data from a malfunctioning locomotive or other large land-based, self-powered transport equipment, comprising:
receiving new continuous parameter data (232) comprising a plurality of anomaly definitions from the malfunctioning equipment;
selecting a plurality of distinct anomaly definitions (233) from the new continuous parameter data;
generating at least one distinct anomaly cluster (236) from the plurality of distinct anomaly definitions;
generating a plurality of weighted repair and distinct anomaly cluster combinations; and
identifying at least one repair (238) for the at least one distinct anomaly cluster using the plurality of weighted repair and distinct anomaly cluster combinations.

2. The method of claim 1 wherein the at least one distinct anomaly cluster (236) comprises at least one of a single distinct anomaly and a plurality of distinct anomaly definitions.

3. The method of claim 1 wherein each of the plurality of weighted repair and distinct anomaly cluster combinations are generated from a plurality of cases (60), each case comprising a repair and at least one distinct anomaly, and each of the plurality of weighted repair and distinct anomaly cluster combinations being assigned a weight determined by dividing (100) the number of times the combination occurs in cases comprising related repairs by the total number of times the combination occurs in said plurality of cases.

4. The method of claim 3 wherein identifying the at least one repair comprises selecting at least one repair using the plurality of weighted repair and anomaly cluster combinations and adding assigned weights for distinct anomaly clusters for related repairs.

5. The method of claim 1 said generating a plurality of weighted repair and distinct anomaly cluster combinations (50, 100) utilizes a plurality of repairs and continuous parameter data comprising a plurality of anomaly definitions.

6. The method of claim 1 wherein the receiving continuous parameter data (232) comprises receiving a new continuous parameter data and comparing the new continuous parameter data to a prior continuous parameter data.

7. A system for analyzing continuous parameter data from a malfunctioning locomotive or other large land-based, self-powered transport equipment, comprising:
a directed weight data storage unit (26) adapted to store a plurality of weighted repair and distinct anomaly cluster combinations;
a processor (12) adapted to receive new continuous parameter data (232) comprising a plurality of anomaly definitions from the malfunctioning equipment;
a processor (12) for selecting a plurality of distinct anomaly definitions (233) from the new continuous parameter data;
a processor (12) for generating at least one distinct anomaly definition cluster (236) from the selected plurality of distinct anomaly definitions;
a processor (12) for generating a plurality of weighted repair and distinct anomaly definition cluster combinations; and
a processor (12) for identifying at least one repair (238) for the at least one distinct anomaly definition cluster using the plurality of predetermined weighted repair and distinct anomaly definition cluster combinations.

8. The system of claim 7 wherein a single processor unit constitutes said processors.

9. A system of claim 7 further comprising:
a processor for generating a plurality of cases (52, 54, 56, 60) from the repair data and the continuous parameter data, each case comprising a repair and a plurality of distinct anomaly definitions;
a processor for generating, for each of the plurality of cases, at least one repair and distinct anomaly definition cluster combination (62); and
a processor for assigning, to each of the repair and distinct anomaly definition cluster combinations, a weight (100), whereby weighted repair and distinct anomaly definition cluster combinations facilitate identification of at least one repair for the malfunctioning equipment.

10. The system of claim 9 wherein the processor for generating the plurality of cases (52, 54, 56, 60) comprises a processor for selecting a repair from the repair data and selecting a plurality of distinct anomaly definitions (54) from the continuous parameter data over a period of time prior to the repair.

11. The system of claim 9 wherein the processor for assigning weights (100) comprises a processor for determining (102), for each repair and distinct anomaly definition cluster combination, a number of times the combination occurs in cases comprising related repairs, and a number of times the combination occurs in the plurality of cases.

12. The system of claim 11 wherein the processor for assigning a weight (100), for each repair and distinct anomaly definition cluster combination, comprises a processor for dividing (108) the number of times the combination occurs in cases comprising related repairs by the number of times the combination occurs in the plurality of cases.

13. The system of claim 11 further comprising;
a processor for generating a new case (152) from repair data and continuous parameter data, the case comprising a repair and a plurality of distinct anomaly definitions;
a processor for generating, for the new case, a plurality of anomaly definition clusters (154) for the plurality of distinct anomaly definitions; and
a processor for redetermining a weight (155, 156, 158) for each of the plurality of repair and anomaly definition cluster combinations to include the new case.

14. The system of claim further comprising:
a repair log data storage unit (20) adapted to store a plurality of repairs; and
a continuous parameter data storage unit (22) adapted to store a plurality of anomaly definitions.

## Patentansprüche

1. Verfahren zum Analysieren von kontinuierlichen Parameterdaten aus einer fehlerhaft arbeitenden Lokomotive oder einem anderen großen Land-basierten, selbst-gespeisten Transportgerät, enthaltend:
Empfangen neuer kontinuierlicher Parameterdaten (232), die einer Anzahl von Anomalie-Definitionen aus dem fehlerhaft arbeitenden Gerät aufweisen,
Wählen einer Anzahl ausgeprägter Anomalie-Definitionen (233) aus den neuen kontinuierlichen Parameterdaten, Generieren von wenigstens einer ausgeprägten Anomalie-Gruppe bzw. -Cluster (236) aus der Anzahl von ausgeprägten Anomalie-Definitionen,
Generieren einer Anzahl von gewichteten Reparatur- und ausgeprägten Anomalie-Gruppenkombinationen und
Identifizieren von wenigstens einer Reparatur (238) für die wenigstens eine ausgeprägte Anomalie-Gruppe unter Verwendung der Anzahl von gewichteten Reparatur- und ausgeprägten Anomalie-Gruppenkombinationen.

2. Verfahren nach Anspruch 1, wobei die wenigstens eine ausgeprägte Anomalie-Gruppe (236) wenigstens eine von einer einzelnen ausgeprägten Anomalie- und einer Anzahl von ausgeprägten Anomalie-Definitionen enthält.

3. Verfahren nach Anspruch 1, wobei jede der mehreren gewichteten Reparatur- und ausgeprägten Anomalie-Gruppenkombinationen aus einer Anzahl von Fällen (60) generiert wird, wobei jeder Fall eine Reparatur und wenigstens eine ausgeprägte Anomalie aufweist, und jede der mehreren gewichteten Reparatur- und ausgeprägten Anomalie-Gruppenkombinationen eine Gewichtung zugeordnet wird, die ermittelt wird durch Dividieren (100) der Anzahl von Malen, die die Kombination in Fällen auftritt, die hiermit in Beziehung stehende Reparaturen aufweisen, durch die Gesamtzahl von Malen, die die Kombination in der Anzahl von Fällen auftritt.

4. Verfahren nach Anspruch 3, wobei das Identifizieren der wenigstens einen Reparatur enthält, dass wenigstens eine Reparatur gewählt wird unter Verwendung der Anzahl von gewichteten Reparatur- und Anomalie-Gruppenkombinationen und zugeordnete Gewichtungen für ausgeprägte Anomalie-Gruppen für hiermit in Beziehung stehende Reparaturen addiert werden.

5. Verfahren nach Anspruch 1, wobei das Generieren einer Anzahl von gewichteten Reparatur- und ausgeprägten Anomalie-Gruppenkombinationen (50,100) eine Anzahl von Reparaturen und kontinuierlichen Parameterdaten verwendet, die eine Anzahl von Anomalie-Definitionen enthalten.

6. Verfahren nach Anspruch 1, wobei das Empfangen kontinuierlicher Parameterdaten (232) enthält, dass neue kontinuierliche Parameterdaten empfangen und die neuen kontinuierlichen Parameterdaten mit früheren kontinuierlichen Parameterdaten verglichen werden.

7. System zum Analysieren kontinuierlicher Parameterdaten aus einer fehlerhaft arbeitenden Lokomotive oder einem anderen großen Land-basierten, selbst-gespeisten Transportgerät enthaltend:
eine gewichtungsgesteuerte Datenspeichereinheit (26), die in der Lage ist, eine Anzahl von gewichteten Reparatur- und
ausgeprägten Anomalie-Gruppenkombinationen zu speichern, einen Prozessor (12), der in der Lage ist, neue kontinuierliche Parameterdaten (232) zu empfangen, die eine Anzahl von Anomalie-Definitionen aus dem fehlerhaft arbeitenden Gerät aufweisen,
einen Prozessor (12) zum Wählen einer Anzahl von ausgeprägten Anomalie-Definitionen (233) aus den neuen kontinuierlichen Parameterdaten,
einen Prozessor (12) zum Generieren von wenigstens einer ausgeprägten Anomalie-Definitionsgruppe bzw. -cluster (236) aus der gewählten Anzahl von ausgeprägten Anomalie-Definitionen,
einen Prozessor (12) zum Generieren einer Anzahl von gewichteten Reparatur- und ausgeprägten Anomalie-Definitions-Gruppenkombinationen und
einen Prozessor (12) zum Identifizieren von wenigstens einer Reparatur (238) für die wenigstens eine ausgeprägte Anomalie-Definitionsgruppe unter Verwendung der Anzahl von vorbestimmten gewichteten Reparatur- und ausgeprägten Anomalie-Definitions-Gruppenkombinationen.

8. System nach Anspruch 7, wobei eine einzelne Prozessoreinheit die Prozessoren bildet.

9. System nach Anspruch 7, ferner enthaltend:
einen Prozessor zum Generieren einer Anzahl von Fällen (52,54,56,60) aus den Reparaturdaten und den kontinuierlichen Parameterdaten, wobei jeder Fall eine Reparatur und
eine Anzahl von ausgeprägten Anomalie-Definitionen enthält, einen Prozessor zum Generieren, für jeden der mehreren Fälle, von wenigstens einer Reparatur- und ausgeprägten Anomalie-Definitions-Gruppenkombination (62) und
einen Prozessor zum Zuordnen, zu jeder der Reparatur- und
ausgeprägten Anomalie-Definitions-Gruppenkombinationen, einer Gewichtung (100), wobei die gewichteten Reparatur- und
ausgeprägten Anomalie-Definitions-Gruppenkombinationen eine Identifizierung von wenigstens einer Reparatur für das fehlerhaft arbeitende Gerät erleichtern.

10. System nach Anspruch 9, wobei der Prozessor zum Generieren der mehreren Fälle (52,54,56,60) einen Prozessor aufweist zum Wählen einer Reparatur aus den Reparaturdaten und zum Wählen einer Anzahl von ausgeprägten Anomalie-Definitionen (54) aus den kontinuierlichen Parameterdaten über einer Zeitperiode vor der Reparatur.

11. System nach Anspruch 9, wobei der Prozessor zum Zuordnen von Gewichtungen (100) einen Prozessor aufweist zum Ermitteln (102), für jede Reparatur- und ausgeprägte Anomalie-Definitions-Gruppenkombination, einer Anzahl von Malen, die die Kombination in den Fällen auftritt, die hiermit in Beziehung stehende Reparaturen enthalten, und einer Anzahl von Malen, die die Kombination in der Anzahl von Fällen auftritt.

12. System nach Anspruch 11, wobei der Prozessor zum Zuordnen einer Gewichtung (100), für jede Reparatur- und ausgeprägte Anomalie-Definitions-Gruppenkombination, einen Prozessor enthält zum Dividieren (108) der Anzahl von Malen, die die Kombination in Fällen auftritt, die hiermit in Beziehung stehende Reparaturen enthalten, durch die Anzahl von Malen, die die Kombination in der Anzahl von Fällen auftritt.

13. System nach Anspruch 11, ferner enthaltend:
einen Prozessor zum Generieren eines neuen Falles (152) aus Reparaturdaten und kontinuierlichen Parameterdaten, wobei der Fall eine Reparatur und eine Anzahl von ausgeprägten Anomalie-Definitionen enthält,
einen Prozessor zum Generieren, für den neuen Fall, einer Anzahl von Anomalie-Definitionsgruppen (154) für die Anzahl von ausgeprägten Anomalie-Definitionen und
einen Prozessor zum erneuten Ermitteln einer Gewichtung (155,156,158) für jede der mehreren Reparatur- und Anomalie-Definitions-Gruppenkombinationen, um den neuen Fall einzuschließen.

14. System nach Anspruch 11, ferner enthaltend:
eine Reparaturprotokolldaten-Speichereinheit (20), die in der Lage ist, eine Anzahl von Reparaturen zu speichern, und
eine Speichereinheit (22) für kontinuierliche Parameterdaten, die in der Lage ist, eine Anzahl von Anomalie-Definitionen zu speichern.

## Revendications

1. Procédé pour analyser des données de paramètre continues provenant d'une locomotive ou de tout autre grand équipement de transport terrestre motorisé qui fonctionne mal, comprenant les étapes consistant à :
recevoir de nouvelles données de paramètre continues (232) comprenant une pluralité de définitions d'anomalie provenant de l'équipement défaillant ;
choisir une pluralité de définitions d'anomalies distinctes (233) dans les nouvelles données de paramètre continues ;
générer au moins un groupe d'anomalies distinctes (236) à partir de la pluralité de définitions d'anomalies distinctes ;
générer une pluralité de combinaisons pondérées de réparations et de groupes d'anomalies distinctes ; et
identifier au moins une réparation (238) pour ledit au moins un groupe d'anomalies distinctes en utilisant la pluralité de combinaisons pondérées de réparations et de groupes d'anomalies distinctes.

2. Procédé selon la revendication 1, dans lequel ledit au moins un groupe d'anomalies distinctes (236) comprend au moins un élément parmi une seule anomalie distincte et une pluralité de définitions d'anomalies distinctes.

3. Procédé selon la revendication 1, dans lequel chacune des combinaisons de ladite pluralité de combinaisons pondérées de réparations et de groupes d'anomalies distinctes est générée à partir d'une pluralité de cas (60), chaque cas comprenant une réparation et au moins une anomalie distincte, et l'on attribue à chacune des combinaisons de ladite pluralité de combinaisons pondérées de réparations et de groupes d'anomalies distinctes un poids déterminé en divisant (100) le nombre de fois où la combinaison se produit dans des cas comprenant les réparations concernées par le nombre total de fois où la combinaison se produit dans ladite pluralité de cas.

4. Procédé selon la revendication 3, dans lequel l'identification de ladite au moins une réponse comprend le fait de sélectionner au moins une réponse en utilisant la pluralité de combinaisons pondérées de réparations et de groupes d'anomalies et d'ajouter les poids attribués pour les groupes d'anomalies distinctes pour les réparations concernées.

5. Procédé selon la revendication 1, dans lequel ladite étape consistant à générer une pluralité de combinaisons pondérées de réparations et de groupes d'anomalies distinctes (50, 100) utilise une pluralité de réparations et de données de paramètre continues comprenant une pluralité de définitions d'anomalies.

6. Procédé selon la revendication 1, dans lequel l'étape de réception de données de paramètre continues (232) comprend le fait de recevoir une nouvelle donnée de paramètre continue et de comparer la nouvelle donnée de paramètre continue à une donnée de paramètre continue précédente.

7. Système pour analyser des données de paramètre continues provenant d'une locomotive ou de tout autre grand équipement de transport terrestre motorisé qui fonctionne mal, comprenant :
une unité dirigée de stockage (26) de données de poids adaptée pour mémoriser une pluralité de combinaisons pondérées de réparations et de groupes d'anomalies distinctes ;
un processeur (12) adapté pour recevoir de nouvelles données de paramètre continues (232) comprenant une pluralité de définitions d'anomalie provenant de l'équipement défaillant ;
un processeur (12) pour choisir une pluralité de définitions d'anomalies distinctes (233) dans les nouvelles données de paramètre continues ;
un processeur (12) pour générer au moins un groupe d'anomalies distinctes (236) à partir de la pluralité choisie de définitions d'anomalies distinctes ;
un processeur (12) pour générer une pluralité de combinaisons pondérées de réparations et de groupes d'anomalies distinctes ; et
un processeur (12) pour identifier au moins une réparation (238) pour ledit au moins un groupe d'anomalies distinctes en utilisant la pluralité de combinaisons pondérées de réparations et de groupes d'anomalies distinctes.

8. Système selon la revendication 7, dans lequel une seule unité de processeur constitue lesdits processeurs.

9. Système selon la revendication 7, comprenant en outre :
un processeur pour générer une pluralité de cas (52, 54, 56, 60) à partir des données de réparation et des données de paramètre continues, chaque cas comprenant une réparation et une pluralité de définitions d'anomalies distinctes ;
un processeur pour générer, pour chaque cas de ladite pluralité de cas, au moins une combinaison (62) de réparation et de groupe de définitions d'anomalies distinctes ; et
un processeur pour attribuer, à chacune des combinaisons de réparations et de groupes de définitions d'anomalies distinctes, un poids (100), grâce à quoi les combinaisons pondérées de réparations et de groupes de définitions d'anomalies distinctes facilitent l'identification d'au moins une réparation pour l'équipement défaillant.

10. Système selon la revendication 9, dans lequel le processeur servant à générer la pluralité de cas (52, 54, 56, 60) comprend un processeur pour choisir une réparation à partir des données de réparation et pour choisir une pluralité de définitions d'anomalies distinctes (54) à partir des données de paramètre continues pendant un intervalle de temps avant la réparation.

11. Système selon la revendication 9, dans lequel le processeur servant à attribuer des poids (100) comprend un processeur pour déterminer (102), pour chaque combinaison de réparations et de groupes d'anomalies distinctes, un nombre de fois où la combinaison se produit dans des cas comprenant les réparations concernées, et un nombre de fois où la combinaison se produit dans la pluralité de cas.

12. Système selon la revendication 11, dans lequel le processeur servant à attribuer un poids (100), pour chaque combinaison de réparations et de groupes d'anomalies distinctes, comprend un processeur pour diviser (108) le nombre de fois où la combinaison se produit dans des cas comprenant les réparations concernées par le nombre de fois où la combinaison se produit dans ladite pluralité de cas.

13. Système selon la revendication 11, comprenant en outre :
un processeur pour générer un nouveau cas (152) à partir de données de réparation et de données de paramètre continues, le cas comprenant une réparation et une pluralité de définitions d'anomalies distinctes ;
un processeur pour générer, pour le nouveau cas, une pluralité de groupes de définitions d'anomalies (154) pour la pluralité de définitions d'anomalies distinctes ; et
un processeur pour redéterminer un poids (155, 156, 158) pour que chacune des combinaisons de ladite pluralité de combinaisons de réparations et de groupes de définitions d'anomalies comprenne le nouveau cas.

14. Système selon la revendication 11, comprenant en outre :
une unité de stockage (20) de données de consignation de réparations adaptée pour mémoriser une pluralité de réparations ; et
une unité de stockage (22) de données de paramètre continues adaptée pour mémoriser une pluralité de définitions d'anomalies.
